# EUROPEAN PATENT APPLICATION

(11) **EP 3 002 088 A2**
(43) Date of publication of application: **06.04.2016**
(21) Application number: 15382222.6
(22) Date of filing: 30.04.2015
(51) Int. Cl.: B25J 9/16, G05B 19/402

(54) **ORTHOGONAL POSITIONING INSTRUMENT, SYSTEM AND METHOD FOR AUTOMATIC MACHINES**

(30) Priority: 02.10.2014 EP 14382378
(71) Applicant: Airbus Operations, S.L., 28906 Getafe (Madrid) (ES)
(72) Inventor: RAMIREZ ALCALA, Carlos, 28906 Getafe (Madrid) (ES); GARCIA-AMADO, Juan-Francisco, 28906 Getafe (Madrid) (ES)
(74) Representative: Carpintero Lopez, Francisco

(57) **Abstract**

The present invention refers to an orthogonal positioning instrument for robotically positioning a tool at a desired location of a working surface, which comprises a support (2) adapted for coupling the tool (7) along a coupling axis (4); three positioning elements (3) coupled to the support (2) around the coupling axis (4); wherein the three positioning elements (3) have ends (5) protruding from the support (2) so as to define a plane substantially normal to the coupling axis (4) for positioning the tool (7) orthogonally to the working surface (8); and wherein each positioning element (3) comprises a distance sensor (6) capable of measuring the distance to the working surface (8) for positioning the tool (7) at the desired location of the working surface (8). Additionally, the invention refers to an orthogonal positioning system, and an orthogonal positioning method for positioning a tool (7) orthogonally to a working surface (8).

## Description

### Object of the invention

The present invention refers to an orthogonal positioning instrument for automatic machines, such as robots, an orthogonal positioning system, and an orthogonal positioning method for positioning a tool orthogonally to a working surface.

One object of the present invention is to provide an instrument, system and method capable of ensuring an orthogonal position of a tool with respect to a working surface.

It is also an object of the invention to provide a real time orthogonal position for the tool during the complete tool positioning process, and under any unexpected change in the working surface position.

It is also an object of the invention to provide a system and method capable of positioning a tool at a new location when the previous location ceases to provide an orthogonal position of the tool relative to the working surface.

Another object of the invention is to provide a simplified and compact instrument which enables using the tool in confined spaces, at the same time that provides a cost-effective solution for ensuring the perpendicularity of the tool with respect to the working surface.

### Background of the invention

In the manufacturing industry, robotic instruments, systems, and methods are used to perform a variety of tasks, such as positioning workpieces, positioning tools with respect to workpieces, and assembling workpieces using tools. In such robotic systems, accurate positioning of the tool with respect to a working surface of the workpiece is critical and vital for the workpiece manufacture and assembling.

In this context, conventional positioning systems rely on artificial vision systems for determining the position of a tool with respect to the working surface. The position of the tool is usually determined by laser spot detection on the working surface. After that, the position of the tool is used to establish a new orthogonal position for the tool with respect to a working surface at a desired location of said working surface. This way, the new orthogonal position of the tool is established before the tool gets in contact with the working surface.

Therefore, if any deformation is performed during tool is contacting the working surface, conventional positioning systems are not able to correct the deviation.

Likewise, if the working surface undergoes an accidentally variation of positioning before using the tool on the working surface, conventional positioning systems are not able to correct the position of the tool.

It would therefore be desirable to provide technical means able to ensure the orthogonality of a tool with respect to a working surface, which at the same time be able to re-establish the orthogonally position of the tool with respect to the working surface at any time of the tool utilization period

### Summary of the invention

The present invention overcomes the above mentioned drawbacks by providing an orthogonal positioning instrument, system and method for automatic machines, such as robots, that ensure the orthogonal position of a tool with respect to a working surface.

A first aspect of the invention refers to an orthogonal positioning instrument for robotically positioning a tool at a desired location of a working surface, which comprises a support adapted for coupling the tool along a coupling axis, and three positioning elements coupled to the support around the coupling axis. The three positioning elements have ends protruding from the support so as to define a plane substantially normal to the coupling axis for positioning the tool orthogonally to the working surface. Each positioning element comprises a distance sensor capable of measuring the distance to the working surface for positioning the tool at the desired location of the working surface.

The invention provides an instrument configured to be attached to a tool, and also configured to provide to the attached tool an orthogonal position with respect to the working surface. The invention thus offers a simplified and compact instrument, since in addition of comprising a support adapted for coupling the tool, comprises three positioning elements that protrude from said support so that their ends define a plane substantially normal to the coupling axis of the tool. With this configuration, the instrument is able to provide a perpendicular position for the tool with respect to the working surface when the instrument rests on the working surface, or when the three positioning elements are equally spaced to the working surface provided the protruding part of the positioning elements have same length.

Additionally, each positioning element is equipped with a distance sensor capable of measuring the distance to the working surface. This way, the instrument allows providing an accurate real time position, since such position is based on the current position of the working surface. Thus, the position provided by the invention is reliable at any case, also when the working surface undergoes deviations or misalignments with respect to the tool after measures have been performed and the tool position established. Moreover, this reliability and accuracy in the tool positioning helps to obtain better results in robotically produced workpieces, enhancing the quality of the same.

A second aspect of the invention refers to an orthogonal positioning system for positioning a tool at a desired location of a working surface, wherein the system comprises a robot having a robot arm articulately mounted therein, a tool connected to the robot arm along a working axis, and a robot arm controller configured to position the robot arm at a desired location for positioning the tool on a working surface. According to the invention the system additionally comprises the orthogonal positioning instrument as defined above, wherein the instrument is connected to the tool such that the coupling axis of the instrument is aligned with the working axis of the tool. Additionally, the robot arm controller of the invention is configured to position the robot arm at a new desired location based on the measured distances by the instrument, when at least one of the positioning elements of the instrument gets in contact with the working surface while the tool is being positioning at the desired location, and wherein the new desired location enables the three positioning elements of the instrument being in contact with the working surface, thereby achieving an orthogonal positioning of the tool with respect to the working surface.

This second aspect of the invention provides a robotic system able to position a tool at a new location of a working surface, so that in this new location the tool is orthogonally positioned with respect to the working surface. This way, the system enables re-establishing an orthogonal position for the tool with respect to the working surface for those cases in which the working surface has undergone deviations or misalignments while the tool is being positioning at the desired location. Therefore, the invention allows getting an accurate and real time orthogonal position before using the tool on the working surface.

Also, the system ensures providing an orthogonal position with respect to the working surface by axially connecting the orthogonal positioning instrument to the tool. This way, the orthogonality is ensured by only placing the three positioning elements of the instrument in contact with the working surface, since the instrument is endowed with a configuration that achieves such orthogonality.

A third aspect of the invention refers to an orthogonal positioning method for positioning a tool at a desired location of a working surface, wherein the tool is connected to a robot arm along a working axis, wherein the robot arm is articulately mounted to a robot, and wherein the method additionally comprises the following steps:
- providing an orthogonal positioning instrument as previously defined,
- connecting the instrument to the tool such that the coupling axis of the instrument is aligned with the working axis of the tool,
- calculating, a robot arm controller, a new desired location for positioning the tool on a working surface based on the measures of the distance sensors of the instrument, when at least one of the positioning elements of the instrument gets in contact with the working surface while the tool is being positioning at a desired location, wherein the new desired location is such that enables the three positioning elements of the instrument being in contact with the working surface,
- positioning the tool at the new desired location.

The third aspect of the invention provides a method to be performed by a robot which allows re-establishing the orthogonality of a tool with respect to a working surface. Likewise the system, the method achieves to provide an accurate and real time orthogonal position before the use of the tool by means of the instrument connected to the tool. Preferably, for achieving such accurate and real time orthogonal position, the step of calculating the new desired location for positioning the tool may comprise measuring, each sensor of each positioning element of the instrument, the distance to a working surface, and sending, each sensor of the instrument, the measured distance to the robot arm controller.

In another preferred embodiment, the method further comprises checking if the three positioning elements of the instrument are in contact with the working surface after positioning the tool at the new desired location. In case that at least one of the positioning elements is spaced from the working surface, the method returns to the calculating step to effectively provide the orthogonal position to the tool. This way, the method ensures the orthogonality of the tool before each use of the tool.

The invention allows reducing costs since no longer needs laser tracker and artificial vision systems. Furthermore, the invention improves the time of manufacture because it requires less time to position the automatic machine.

### Brief description of the drawings

For a better comprehension of the invention the following drawings are provided for illustrative and non limiting purposes, wherein:
Figure 1 shows a perspective view of an orthogonal positioning instrument according to a preferred embodiment of the invention.
Figure 2 shows a perspective view of the orthogonal positioning instrument shown in Figure 1 coupled to a tool to be used on a working surface.
Figure 3 shows different perspective views of an orthogonal positioning instrument according to another preferred embodiment of the invention.
Figure 4 shows a perspective view of an orthogonal positioning system according to a preferred embodiment of the invention, and a detailed view showing the elements connected to the robot arm.

### Preferred embodiment of the invention

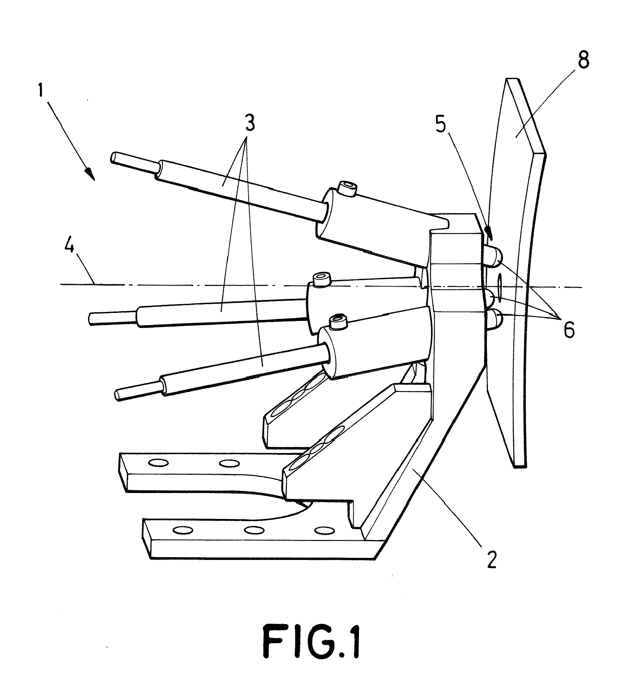

Figure 1 shows an orthogonal positioning instrument 1 that comprises a support 2 configured to be coupled to a tool (not shown), and three positioning elements 3 coupled to the support 2 around a coupling axis 4. The three positioning elements 3 have ends 5 that protrude from the support 2. The final extremes of these ends 5 define a plane substantially normal to the coupling axis 4. With this configuration, the instrument 1 is able to provide an orthogonal position when resting on a surface, and in particular, when is positioned on the working surface 8.

The instrument 1 is also provided with sensors 6 for enabling the instrument 1 to be able to provide an accurate and real time position. For that, each positioning element 3 comprises a distance sensor 6 capable of measuring the distance to the working surface 8. Thus, the instrument is configured to be able to provide the spatial position of each positioning element 3 when required.

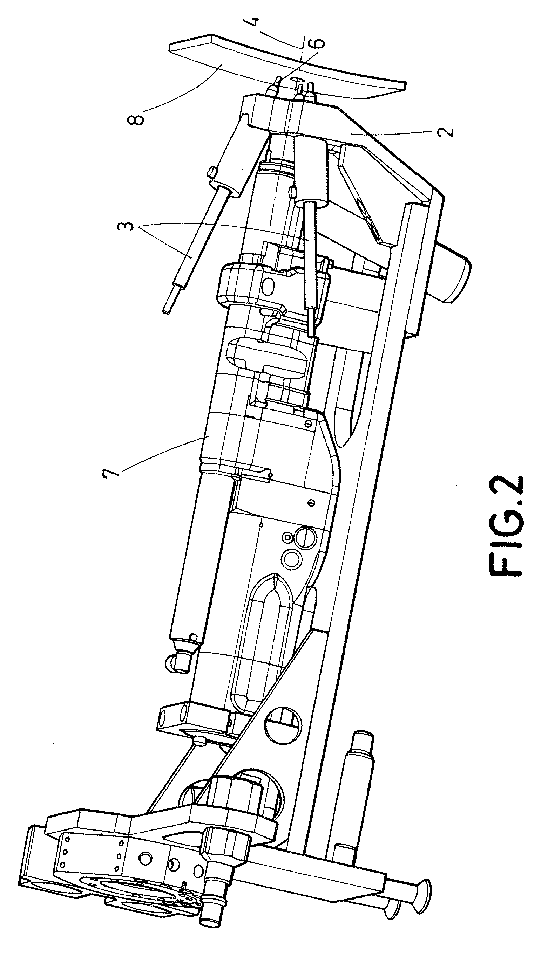

Figure 2 shows the instrument 1 coupled to a tool 7 by the support 2, so that the coupling axis 4 of the instrument 1 is aligned with the working axis 12 of the tool 7. Providing a fix coupling between the instrument 1 and the tool 7, and a common axis for the tool 7 and the instrument 1 the task of positioning the tool 7 with respect to the working surface 8 is facilitated, because this way, the instrument 1 behaves as an integral part of the tool 7.

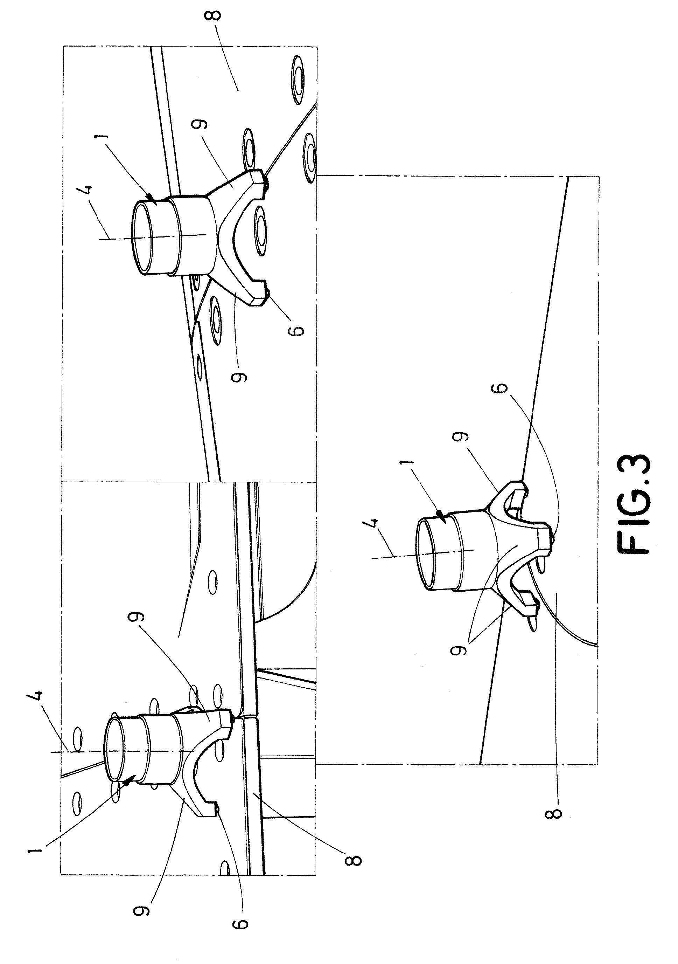

Figure 3 shows an orthogonal positioning instrument 1 according to another preferred embodiment. As shown, the support 2 is configured as a unitary body, which additionally comprises the three positioning elements 3 conformed as feet 9 for the body. Similarly to the instrument 1 shown in Figures 1 and 2, the ends of the feet 9 define a plane substantially normal to the coupling axis 4 to provide an orthogonal position for the tool. In the same way, the instrument 1 of Figure 3 is equipped at each foot 9 with a distance sensor 6 capable of measuring the distance from the foot 9 to the working surface 8.

Preferably, as shown in Figure 3, the instrument 1 has a tripod shape having a tubular body with a central orifice for the passage of the tool (not shown) and a surrounding base having a circular section from which the three feet 9 protrude.

According to a preferred embodiment, the distance sensors 6 are placed at the final ends 5 of the positioning elements 3.

Preferably, the positioning elements 3 are equidistantly arranged to each other.

According to another preferred embodiment, the positioning elements 3 have substantially the same length.

According to another preferred embodiment, the distance sensors 6 are capacitive or inductive sensors.

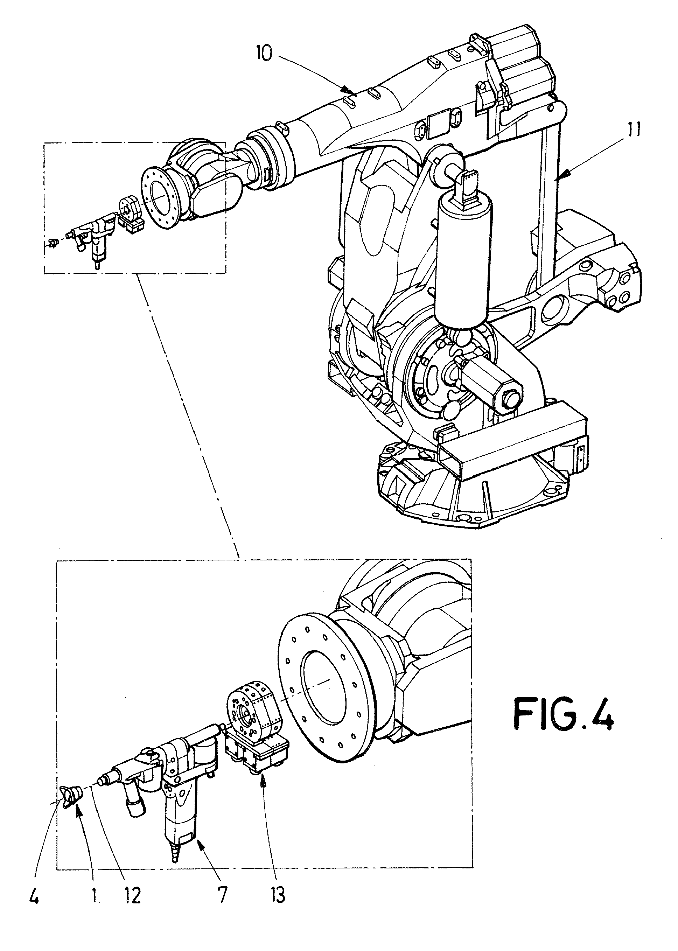

Figure 4 shows a perspective view of an orthogonal positioning system according to a preferred embodiment of the invention, and an exploded view detailing the elements connected to the robot arm of the system.

As shown, the system comprises a robot 11 having a robot arm 10 articulately mounted to the robot 11, a tool 7 connected to the robot arm 10 along a working axis 12, a robot arm controller configured to position the robot arm 10 on the working surface 8 at a desired location for positioning the tool, and the orthogonal positioning instrument 1 of the invention. The instrument 1 is connected to the tool 7 such that the coupling axis 4 of the instrument 1 is aligned with the working axis 12 of the tool 7.

By connecting the orthogonal positioning instrument 1 to the tool 7, the system is able to provide an orthogonal position to the tool 7 with respect to the working surface 8 with no more than positioning the three positioning elements 3 of the instrument 1 in contact with the working surface 8. In order to re-establish the orthogonally position of the tool with respect to the working surface at any time of the tool utilization period, the robot arm controller is configured to position the robot arm 10 at a new desired location based on the measured distances by the instrument 1, wherein such measured distances provide the orthogonal position of the tool.

Preferably, the robot arm controller is further configured to determine the robot arm movements required for positioning the tool 7 at the new desired location, which corresponds to the measured distances by the instrument 1.

Preferably, and as shown in Figure 4, the system comprises a tool changer 13 mounted between the tool 7 and the robot arm 10 for enabling connecting the tool 7 to the robot arm 10.

Preferably, the tool 7 is a drilling tool or a riveting tool.

Finally, and in order to be able to properly ensure the orthogonal position of the tool with respect to a working surface, said working surface has to be substantially planar, such that the surface has a maximum radius of curvature of 500 mm.

## Claims

1. An orthogonal positioning instrument for robotically positioning a tool at a desired location of a working surface, **characterized in that** comprises:
- a support (2) adapted for coupling the tool (7) along a coupling axis (4),
- three positioning elements (3) coupled to the support (2) around the coupling axis (4),
- wherein the three positioning elements (3) have ends (5) protruding from the support (2) so as to define a plane substantially normal to the coupling axis (4) for positioning the tool (7) orthogonally to the working surface (8), and
- wherein each positioning element (3) comprises a distance sensor (6) capable of measuring the distance to the working surface (8) for positioning the tool (7) at the desired location of the working surface (8).

2. An orthogonal positioning instrument according to claim 1, wherein the support (2) is configured as a unitary body which additionally comprises the three positioning elements (3) conformed as feet (9) for the body.

3. An orthogonal positioning instrument according to any of the preceding claims, wherein the distance sensors (6) are placed at the final ends (5) of the positioning elements (3).

4. An orthogonal positioning instrument according to any of the preceding claims, wherein the positioning elements (3) are equidistantly arranged to each other.

5. An orthogonal positioning instrument according to any of the preceding claims, wherein the positioning elements (3) have substantially the same length.

6. An orthogonal positioning instrument according to any of the preceding claims, wherein the distance sensors (6) are capacitive or inductive sensors.

7. An orthogonal positioning system for positioning a tool at a desired location of a working surface that comprises:
- a robot (11) having a robot arm (10) articulately mounted therein,
- a tool (7) connected to the robot arm (10) along a working axis (12),
- a robot arm controller configured to position the robot arm (10) at a desired location for positioning the tool (7) on a working surface (8),
**characterized in that** the system further comprises:
- the orthogonal positioning instrument (1) according to any of the previous claims 1-6, wherein the instrument (1) is connected to the tool (7) such that the coupling axis (4) of the instrument (1) is aligned with the working axis (12) of the tool (7),
and **in that** the robot arm controller is configured to position the robot arm (10) at a new desired location for the tool () based on the measured distances by the instrument (1), when at least one of the positioning elements (3) of the instrument (1) gets in contact with the working surface (8) while the tool (7) is being positioning at the desired location,
- and wherein the new desired location enables the three positioning elements (3) of the instrument (1) being in contact with the working surface (8), thereby achieving an orthogonal positioning of the tool (7) with respect to the working surface (8).

8. An orthogonal positioning system according to claim 7, wherein the robot arm controller is further configured to determine the robot arm movements required for positioning the tool (7) at the new desired location.

9. An orthogonal positioning system according to any of claims 7-8, wherein the tool (7) is a drilling tool.

10. An orthogonal positioning system according to any of claims 7-8, wherein the tool (7) is a riveting tool.

11. An orthogonal positioning system according to any of claims 7-10, wherein the system comprises a tool changer (13) mounted between the tool (7) and the robot arm (10) for enabling connecting the tool (7) to the robot arm (10).

12. An orthogonal positioning method for positioning a tool at a desired location of a working surface, wherein the tool (7) is connected to a robot arm (10) along a working axis (12), wherein the robot arm (10) is articulately mounted to a robot (11), and wherein the method is **characterized by** comprising the following steps:
- providing an orthogonal positioning instrument (1) according to any of the previous claims 1-6,
- connecting the instrument (1) to the tool (7) such that the coupling axis (4) of the instrument (1) is aligned with the working axis (12) of the tool (7),
- calculating, a robot arm controller, a new desired location for positioning the tool (7) on a working surface (8) based on the measures of the distance sensors (6) of the instrument (1), when at least one of the positioning elements (3) of the instrument (1) gets in contact with the working surface (8) while the tool (1) is being positioning at a desired location, wherein the new desired location is such that enables the three positioning elements (3) of the instrument (1) being in contact with the working surface (8),
- positioning the tool (7) at the new desired location.

13. An orthogonal positioning method according to claim 12, wherein calculating the new desired location for positioning the tool (7) comprises:
- measuring, each sensor (6) of each positioning element (3) of the instrument (1), the distance to a working surface (8), and
- sending, each sensor (6) of the instrument (1), the measured distance to the robot arm controller.

14. An orthogonal positioning method according to any of claims 12-13, wherein the method further comprises checking if the three positioning elements (3) of the instrument (1) are in contact with the working surface (8) after positioning the tool (7) at the new desired location, and in case that at least one of the positioning elements (3) is spaced from the working surface (8) the method returns to the calculating step.
